# EUROPEAN PATENT APPLICATION

(11) **EP 3 150 411 A1**
(43) Date of publication of application: **05.04.2017**
(21) Application number: 15803817.4
(22) Date of filing: 03.02.2015
(51) Int. Cl.: B60G 11/24, B60G 11/22

(54) **SINGLE-POINT SUSPENSION DEVICE**

(30) Priority: 03.06.2014 CN 201410241586
(71) Applicant: Foshan Ho's Mechanical Manufacturing Co., Ltd., Foshan, Guangdong 528515 (CN)
(72) Inventor: HE, Chifeng, Foshan Guangdong 528515 (CN); MAI, Zhicheng, Foshan Guangdong 528515 (CN)
(74) Representative: Manitz, Finsterwald & Partner GbR
(86) International application number: PCT/CN2015/072159
(87) International publication number: WO 2015/184842

(57) **Abstract**

A single-point suspension device comprises: a first axle assembly (206) and a second axle assembly (203) for tire installation; a central shaft platform (208) fixedly connected with a frame and a central shaft (205); a plurality of shear springs (202) arranged on two side plates of the central shaft platform (208) and fixedly connected with the central shaft; a plurality of variable-rigidity springs arranged on the lower side of a top plate of the central shaft platform (208) and fixedly connected with the central shaft (205); a first balancing beam structure (204) and a second balancing beam structure (207) which are connected with two ends of the central shaft (205). Two ends of the first balancing beam structure (204) are fixedly connected with the first axle assembly (206) and the second axle assembly (203) respectively, and two ends of the second balancing beam structure (207) are fixedly connected with the first axle assembly (206) and the second axle assembly (203) respectively. The damping effect of the single-point suspension device is improved, and the impact force acting on the central shaft bearing seat and the central shaft platform is buffered effectively, and the complicated manufacture process of board spring is avoided and the self-weight is reduced.

## Description

### CROSS-REFERENCES TO RELATED APPLICATIONS

This application is a national stage application of PCT Patent Application No. PCT/CN2015/072159, filed on Feb. 3, 2015, which claims priority to Chinese Patent Application No. 2014102415860, filed on Jun. 3, 2014, the content of all of which is incorporated herein by reference.

### FIELD OF THE INVENTION

The present invention relates to the field of suspension device, and, more particularly, to a single-point suspension device made of a rubber spring and used for a frame and tire of a trailer or semi-trailer.

### BACKGROUND

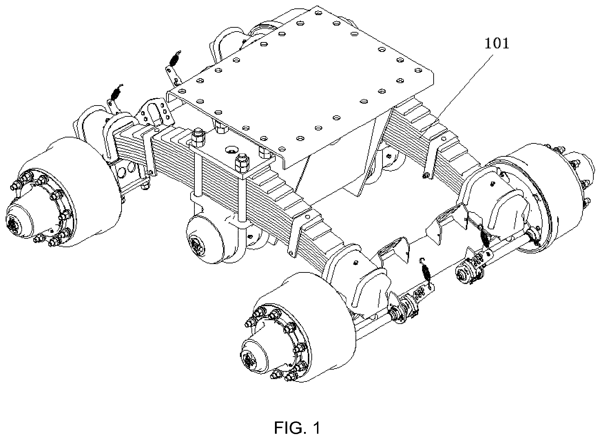

In current technologies, a single-point suspension device for a trailer or semi-trailer, as shown in FIG. 1, adopts a leaf spring 101 as a cushion, which is horizontally mounted on both ends of a central shaft assembly, and connected with the central shaft assembly with an axle assembly; the said leaf spring is made of a plurality of metal boards stacking together.

However, adopting the leaf spring as a cushion has a plurality of following defects:
1. A manufacturing process of the leaf spring is complex, and its qualitycould not be guaranteed.
2. Both volume and weight of the leaf spring are relatively great, making the single-point suspension system itself heavy, and reducing an effective carrying of a vehicle while increasing its fuel consumption.
3. When the vehicle is empty-loaded, it is hard for the leaf spring to generate deformation, causing a limited damping effect, when the vehicle passes through a rugged road, an impact from the road to an axle is relatively large, causing a fast copper socket wearing, affecting a service life. Meanwhile, a noise generated by the impact is also great.
4. When the vehicle is heavy loaded, an arc height of the leaf spring decreases under pressure, and a chassis of the vehicle gets lower, while friction between steal boards increases, thus, after a long time usage, it will be easy to generate a displacement, affecting the service life.
5. The leaf spring is easy to get rust after weathering, which affects the usage performance, and owns a relatively high requirement for lubrication.
6. Atraditional single-point suspension can only adjust a balance between a front tire and a rear tire, without adjusting the balance between the left and right tire, thus it reduces a stability of anti-roll, affecting a driving quality.

Therefore, the current technology needs to be improved and developed.

### BRIEF SUMMARY OF THE DISCLOSURE

According to the above described defects in the prior arts, the purpose of the present invention is providing a single-point suspension device, in order to solve the problem in the prior arts that the current single-point suspension device is bulky, without a good shock absorption effect, and having a short service life.

In order to achieve the above mentioned goals, the technical solution of the present invention to solve the technical problems is as follows:
A single-point suspension device, besides a first and second axle assembly for tire installation, it further comprises:
   a central shaft platform fixedly connected with a frame and a central shaft;
   a plurality of shear springs arranged on two side plates of the central shaft platform and fixedly connected with the central shaft; and, a plurality of variable-rigidity springs arranged on a lower side of a top plate of the central shaft platform and fixedly connected with the central shaft;
   a first balancing beam structure and a second balancing beam structure, which are connected with two ends of the central shaft;
   wherein, two ends of the first balancing beam structure are fixedly connected with the first axle assembly and the second axle assembly respectively, and two ends of the second balancing beam structure are fixedly connected respectively with the first axle assembly and the second axle assembly.

The said single-point suspension device, wherein, both ends of the said central shaft connect fixedly to a central position of the first balancing beam structure and the second balancing beam structure through a U-shaped bolt.

The said single-point suspension device, wherein, the said first balancing beam structure and the said second balancing beam structure connect fixedly with the central shaft through a central shaft bearing seat, between the said central shaft and the central shaft bearing seat, there is a central shaft copper socket arranged, whose both sides are arranged sequentiallyan oil-seal ring and an oil-seal seat respectively,a base of the central shaft bearing seat is fixed to a backing plate of the balancing beam structure through a U-shaped bolt.

The said single-point suspension device, wherein, each of the said first and second balancing beam structure contains a square tube with a positioning hole arranged on either end and a backing plate arranged at a center position of the square tube for the U-shaped bolt installation.

The said single-point suspension device, wherein, the said square tube, whose material is a low carbon alloy steel, is made of a hollow pipe extruding into a square shape by a square extrusion machine, and then processed and finished by heat treatment.

The said single-point suspension device, wherein, three equal height variable-rigidity springs are arranged, wherein, the first, second and third variable-rigidity springs keep a certain distance away from the first, second and third top plates of the central shaft platform respectively, while the distance between the first variable-rigidity spring and the first top plate is equal to that between the third variable-rigidity spring and the third top plate, but smaller than that between the second variable-rigidity spring and the second top plate.

The said single-point suspension device, wherein, a spring seat is arranged on the said central shaft, applied to fixing a shear spring or/and a variable-rigidity spring, the said shear spring is arranged between a side plate of the central shaft platform and a side plate of the spring seat, the said variable-rigidity spring is arranged between a top plate of the central shaft platform and a top plate of the spring seat.

The said single-point suspension device, wherein, the said central shaft platform is arranged symmetrically on both sides of a vertical plane passing through a center of the central shaft and perpendicular to an axial direction of the central shaft, two shear springs are arranged on both side plates of the central shaft platform respectively.

The said single-point suspension device, wherein, the said first balancing beam structure and the said second balancing beam structure are arranged in parallel, and the said first balancing beam structure is perpendicular to the first axle assembly or an axial direction of the first axle assembly.

The said single-point suspension device, wherein, the said variable-rigidity spring comprises an elastic body made of a plurality of elastic materials, a steel board arranged on bottom of the elastic body and wrapped by the elastic body, and at least one installation hole arranged in bottom of the said elastic body and applied to installing the fasteners.

The said single-point suspension device, wherein, the said shear spring comprises an elastic body made of elastic materials, a plurality of steel boards arranged in the elastic body and wrapped by the elastic body, as well as a plurality of installation holes arranged on top and bottom of the said elastic body and applied to installing a plurality of fasteners.

The said single-point suspension device, wherein, the said shear spring and/ or variable-rigidity spring is installed on the central shaft assembly through the fasteners directly or indirectly.

The said single-point suspension device, wherein, it further comprises a platen with 1 central hole and 4 side holes arranged, wherein, the said central hole, corresponding to the positioning hole arranged in the square tube, is applied to fixing the platen to the balancing beam structure; the said side holes, applied to installing the U-shaped bolts, and the axle assembly are connected fixedly with the balancing beam structure through the U-shaped bolts.

Comparing to the technologies in the prior art, the present invention provides a single-point suspension device, which changes a conventional single-point suspension device composed of leaf springs, and adopts a rubber spring (variable-rigidity spring and shear spring) to replace a leaf spring, which owns a plurality of following advantages:
1) When a variable-rigidity spring is taking a load, its stiffness increases following increases of the load, which may make the single-point suspension device afford more loads; a structure design of the variable-rigidity spring brings it a sufficient flexibility and rigidity, which may increase the damping effect and service life of the single-point suspension device.
2) A shear spring is made of elastic materials and a plurality of spaced steel plates, which has made it not easy to get deformed and damagedafter a long-term loading, increasing an anti-fatigue strength; the shear spring owns a strong impact resistance, when it is taking a shear stress, it may balance and disperse the loads pretty well, maintaining a stability of the platform.
3) Since the single-point suspension device is adopting a variable-rigidity spring and a shear spring, the assembly and disassembly of the single-point suspension device are simple and easy.
4) The structure connected by a plurality of rubber pieces has replaced the traditional rigid structure in the central shaft assembly, an impact absorption ability of a rubber is better than that of a steel, which may effectively buffer an impact force suffered by the central shaft bearing seat and the central shaft platform, making the central shaft bearing seat more durable; the central shaft assembly may distribute the load to every tire after adjusting automatically, and achieve a smooth driving.
5) The balance beam setting between axles has improved traction, stability and maneuverability. Replacing the leaf spring, may not only avoid a complex manufacture process of the leaf spring, but also reduce a hanging self-weight, take a 32T as an example, the hanging weight may reduce over 40%, which has reduced a fuel consumption, and improved the effective load, as well as avoided the noise generated by the impact force.

### BRIEF DESCRIPTION OF THE DRAWINGS

FIG. 1 illustrates a schematic diagram of a single-point suspension device adopting a leaf spring.
FIG. 2 illustrates a schematic diagram on the single-point suspension device described in a preferred embodiment as provided in the present invention.
FIG. 3 illustrates a local side view of the single-point suspension device described in the present invention.
FIG.4 illustrates a sectional view of the single-point suspension device shown in FIG. 2 passing through a midpoint of the central shaft and perpendicular to the axis of the central shaft.
FIG.5 illustrates an upright sectional view of the single-point suspension device shown in FIG. 2 passing through the axis of the central shaft.
FIG.6 illustrates a schematic diagram of the balancing beam structure shown in FIG. 2.
FIG.7 illustrates a sectional view of ashear spring described in an embodiment of the present invention.
FIG.8 illustrates a sectional view of the variable-rigidity spring as described in an embodiment of the present invention.
FIG. 9 illustrates a local exploded view of a connection structure arranged between the balancing beam structure and the central shaft assembly.

### DETAILED DESCRIPTION OF EMBODIMENTS

The present invention provides a single-point suspension device, in order to make the purpose, technical solution and the advantages of the present invention clearer and more explicit, further detailed descriptions of the present invention are stated here, referencing to the attached drawings and some preferred embodiments of the present invention.It should be understood that the detailed embodiments of the invention described here are used to explain the present invention only, instead of limiting the present invention.

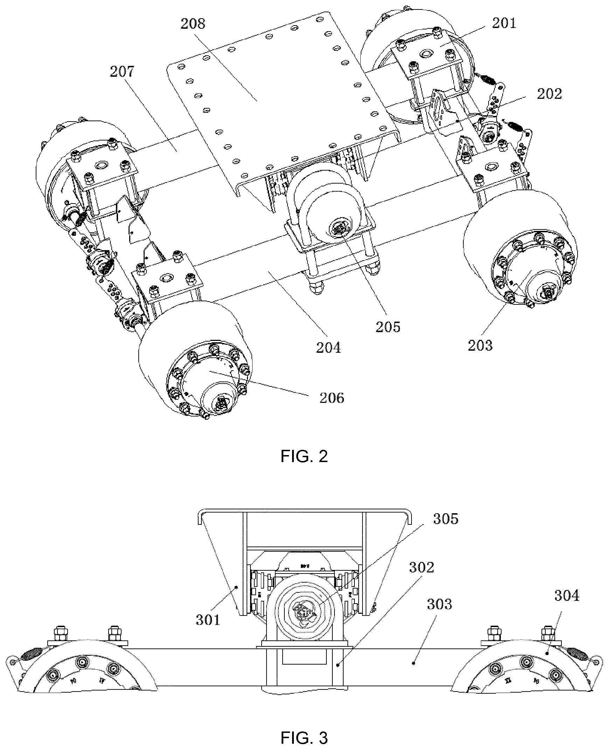

. FIG. 2 illustrates a schematic diagram on the single-point suspension device described in a preferred embodiment as provided in the present invention.Shown as FIG. 2, the single-point suspension device described in the present invention, comprises: a first axle assembly 206 and a second axle assembly 203 for tire installation; as well as a central shaft platform 208, fixedly connecting to a frame, and a central shaft 205; a plurality of shear springs 202 arranged on both side plates of the central shaft platform 208 and fixedly connected with the central shaft 205, and a plurality of variable-rigidity springs (not labeled) arranged on lower side of a top plate of the central shaft platform 208 and fixedly connecting with the central shaft 205; a first balancing beam structure 204 and a second balancing beam structure 207 connecting to both ends of the central shaft 205; wherein, both ends of the first balancing beam structure 204 are fixedly connected to the first axle assembly 206 and the second axle assembly 203 respectively, and both ends of the second balancing beam structure 207 are fixedly connecting to the first axle assembly 206 and the second axle assembly 203 respectively. The said central shaft platform 208 is arranged symmetrically on both sides of a vertical plane passing through a center of the central shaft and perpendicular to an axial direction of the central shaft, two shear springs are arranged on both side plates of the central shaft platform respectively, in order to facilitate an installation, a chamfer is designed on an upside of the side plate.

The said single-point suspension device, between the central shaft and the central shaft platform, a connection structure of rubber piece is adopted, instead of a traditional steel board welded rigid structure, the rubber owns a pretty good damping effect, may reduce an impact force a vehicle suffered to a maximum extent, may extend a service life, and effectively balance a driving comfort and a handling stability; the central shaft and the axle assembly are connected through a balancing beam structure, instead of a traditional leaf spring, which avoids lubrication, reduces noise, lowers a hanging self weight, increases an effective load.

The above said single-point suspension device, preferably, the said first and the said second balancing beam structure are arranged in parallel, and are perpendicular to the first axle assembly or an axial direction of the first axle assembly. This makes both tires connecting to the single-point suspension device symmetrical, and when a force is applied, it will be distributed equally to the connected tires.

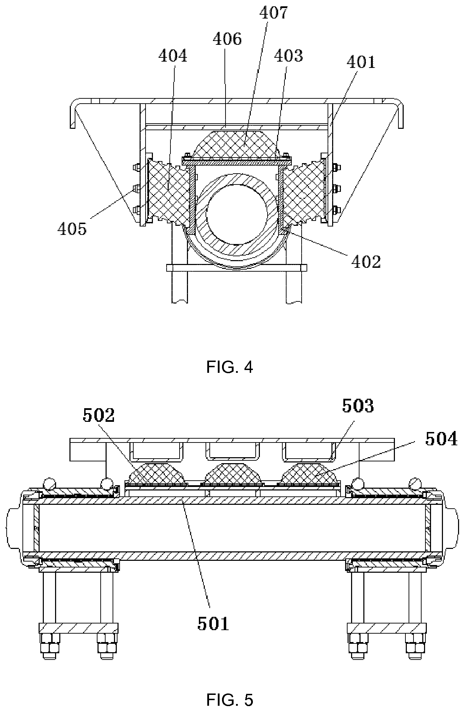

Referencing to FIG. 3 and FIG. 4, wherein, FIG. 3 illustrates a local side view of the single-point suspension device described in the present invention; FIG.4 illustrates a sectional view of the single-point suspension device shown in FIG. 2 passing through a midpoint of the central shaft and perpendicular to the axis of the central shaft. Shown as FIG. 3 and FIG. 4, a balancing beam structure 303 connects to the central shaft 305 fixedly through a U-shaped bolt 302; a spring seat (composed by a top plate 403 and a side plate 402) is arranged on the said central shaft 305 and applied to fixing a shear spring 404 or/and a variable-rigidity spring 407, the said shear spring 404 is arranged between a side plate 401 of the central shaft platform 301 and a side plate 402 of a spring seat, the said variable-rigidity spring 407 is arranged between a top plate 406 of the central shaft platform 301 and a top plate 403 of the spring seat. The said balancing beam structure 303 connects fixedly to an axle assembly 304. Wherein, both ends of the central shaft 305 connect fixedly to a center position of the balancing beam structure 303 (including the first balancing beam structure and the second balancing beam structure) through the U-shaped bolt 302.

FIG.5 illustrates an upright sectional view of the single-point suspension device shown in FIG. 2 passing through the axis of the central shaft. Shown as FIG. 5, three variable-rigidity springs504 are arranged on the said single-point suspension device, the variable-rigidity spring 504 is arranged on a steel backing plate 502, and the steel backing plate 502 is fixed on the central shaft assembly 501, a top surface of the variable-rigidity spring 504 supports the central shaft platform 503. The arranged three variable-rigidity springs, wherein, three equal height variable-rigidity springs are arranged, wherein, a first variable-rigidity spring and a third variable-rigidity spring arranged on both sides support a first top plate and a third top plate of the central shaft platform respectively, a second variable-rigidity spring arranged in the middle is a certain distance away from a second top plate. Of course, it is also possible to keep the first, second and third variable-rigidity spring a certain distance away from the first, second and third top plate respectively, while making the distance between the first variable-rigidity spring and the first top plate equal to that between the third variable-rigidity spring and the third top plate, but smaller than that between the second variable-rigidity spring and the second top plate.

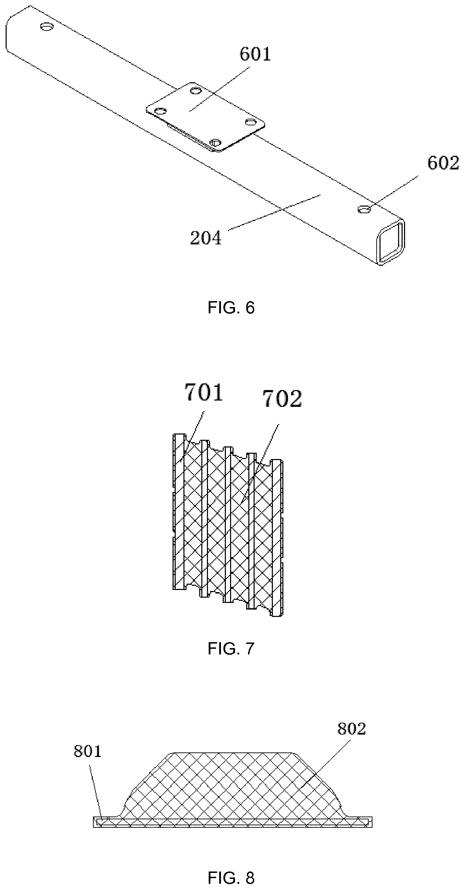

FIG.6 illustrates a schematic diagram of the balancing beam structure shown in FIG. 2. As shown in FIG. 6, the said balancing beam structure includes a square tube 204, whose either end has a positioning hole 602 arranged, and a backing plate 601, arranged at a center position of the square tube and applied to installing the U-shaped bolt. A material of the said square tube is a low carbon alloy steel, a manufacturing process of the square tube 204 is made of a hollow pipe extruding into a square shape by a square extrusion machine, before heat processing. The balancing beam structure may be positioned on the axle through the positioning hole 602, and connecting with the axle assembly through a plurality of pins. The said balancing beam square tube is made of low-carbon alloy seamless steel after square extrusion, which avoids the defects of steel board welded structure, simplifies the process, as well as improves the performance and strength.

FIG.7 illustrates a sectional view of ashear spring described in an embodiment of the present invention. Shown as FIG. 7, the said shear spring is composed by an elastic body 702 made of elastic material, a plurality of steel boards 701 arranged in the elastic body and wrapped by the elastic body, as well as a plurality of installation holes arranged on top and bottom of the said elastic body and applied to installing a plurality of fasteners, wherein, the said a plurality of steel boards and bottom of the elastic body are arranged in parallel; bottom face of the said elastic body is a rectangle or square, if it is a rectangle, a ratio of its length to its width is 1:1.8; the said elastic material is a neoprene or natural rubber, with a hardness between 50-80HA; top plate of the said elastic body is a rectangle or square, arranged in parallel over the bottom plate of the said elastic body, and areas of both top and bottom plates are equal. The said shear spring, preferably, six installation holes are arranged in each of the top and bottom of the said elastic body respectively, three installation holes are arranged in each of two opposite sides in the top and bottom of the said elastic body, and distances between central axles of two neighbor installation holes are equal, central axles of the three installation holes are parallel and in a same plane.

FIG.8 illustrates a sectional view of the variable-rigidity spring as described in an embodiment of the present invention. Shown as FIG. 8, the said variable-rigidity spring is composed by an elastic body 802 made of elastic material, a steel board 801 arranged on bottom of the elastic body and wrapped by the elastic body, and at least one installation hole arranged on bottom of the said elastic body and applied to installing the fasteners. The said variable-rigidity spring, wherein, the said steel board is arranged in parallel with the bottom plate of the elastic body; bottom plate of the said elastic body is a rectangle or square, if it is a rectangle, a ratio of its length to its width is 1:1.8; the said elastic material is a neoprene or natural rubber, with a hardness between 50-80HA; top plate of the said elastic body is a rectangle or square, arranged in parallel over the bottom face of the said elastic body, and area of the top plate of the said elastic body is smaller than that of the bottom plate of the said elastic body; the rectangular or square centers on both the top and bottom plates of the said elastic body locate on a same straight line perpendicular to the top plate of the elastic body. The said variable-rigidity spring, preferably, an installation hole is arranged in each of four angles of the rectangular and square on bottom of the said elastic body.

It should be noted that, the shear spring and /or variable-rigidity spring described in the present invention are installed directly into the central shaft assembly through the fasteners without any other connectors, which makes both assembly and disassembly of the single-point suspension device described in the present invention pretty simple, and, by using shear springs and variable-rigidity springs, the single-point suspension device is made pretty simple.

Continue referencing to FIG. 2, the said single-point suspension device, further comprises a platen 201 with a central hole and 4 side holes arranged, wherein, the said central hole, corresponding to the positioning hole arranged in the square tube, is applied to fixing the platen to the balancing beam structure; the said side holes, applied to installing the U-shaped bolts, connecting fixedly the axle assembly with the balancing beam structure through the U-shaped bolts.

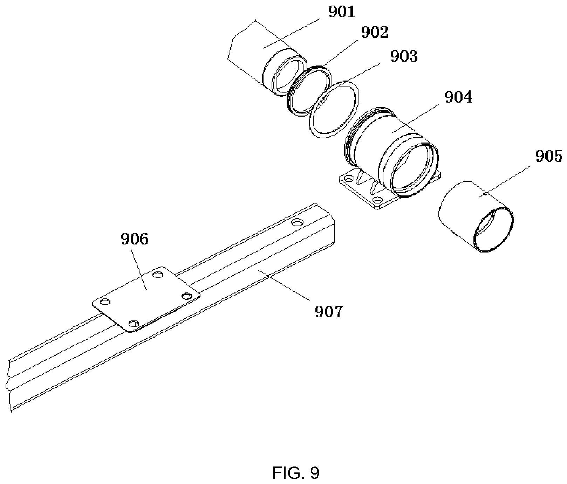

Referencing to FIG. 9, which illustrates a local exploded view of a connection structure arranged between the balancing beam structure and the central shaft assembly. Shown as FIG. 9, a balancing beam structure 907 connects fixedly with a central shaft 901 through a central shaft bearing seat 904, a central shaft copper socket 905 is arranged between the said central shaft 901 and the central shaft bearing seat 904, while an oil-seal ring 903 and an oil-seal seat 902 (not shown on the other side) are arranged sequentially on both sides of the central shaft copper socket respectively. A base of the central shaft bearing seat 904 is fixed to a backing plate 906 of the balancing beam structure 907 through a U-shaped bolt.

It should be emphasized that, the single-point suspension device provided in the present invention, wherein, there are a certain rotation angles in a direction of front and rear for the central shaft, under a condition of not considering tires, the rotation angle is about 0°∼45°. The rubber piece between the platform and the central shaft has enough elasticity and rigidity, the rubber spring has a pretty good elongation rate, there is soft rubber spring seat socket arranged on the connection part between the balancing beam structure and the axle. The central shaft assembly may not only adjust the balance between front and rear tires, but also adjust the balance between left and right tires.

All above, the present invention provides a single-point suspension device, which has changed that composed by a traditional leaf spring, by adopting a rubber spring (variable-rigidity spring and shear spring) instead of a leaf spring, the advantage is: when a variable-rigidity spring is taking loads, its rigidity increases following the load increasing, which makes the single-point suspension device bear a more load; a structural design of the variable-rigidity spring, brings it sufficient elasticity and rigidity, which may increase the damping effect of the single-point suspension device and the service life; the shear spring is composed by elastic materials and a plurality of spaced steel plates, which makes it not easy to get deformed and broken after a long time loading, thus increases the anti-fatigue strength; the shear spring has a strong impact resistance, when subjecting to a shear stress, it may balance and disperse the loading pretty well, thus may maintain the stability of the platform; due to adopting a variable-rigidity spring and a shear spring, it makes both assembly and disassembly of the single-point suspension device simple and easy; the central shaft assembly adopts a structure connected by the rubber piece instead of a traditional rigid structure, due to the impact resistance of a rubber is better than that of a steel, it may effectively buffer the impact applied to the central shaft bearing seat and the central shaft platform, make the central shaft bearing seat more durable; the central shaft assembly may adjust the load automatically before distributing to each tire, achieving a stable driving; the balancing beam improves the traction, stability and maneuverability between the axles. Replacing a leaf spring, may not only avoid the complex manufacture processes of the leaf spring, but also reduce the self suspension weight, take a 32T as an example, the suspension weight may be reduced over 40%, the oil consumption is decreased, and the effective load is improved, also, it has avoided the noise caused by the impact force.

It should be understood that, the application of the present invention is not limited to the above examples listed. Ordinary technical personnel in this field can improve or change the applications according to the above descriptions, all of these improvements and transforms should belong to the scope of protection in the appended claims of the present invention.

## Claims

1. A single-point suspension device, besides a first and a second axle assembly for tire installation, it further comprises:
a central shaft platform fixedly connected with a frame and a central shaft;
a plurality of shear springs arranged on two side plates of the central shaft platform and fixedly connected with the central shaft; and, a plurality of variable-rigidity springs arranged on the lower side of a top plate of the central shaft platform and fixedly connected with the central shaft;
a first and a second balancing beam structure, which are connected with two ends of the central shaft;
wherein, two ends of the first balancing beam structure are fixedly connected with the first axle assembly and the second axle assembly respectively, and two ends of the second balancing beam structure are fixedly connected with the first axle assembly and the second axle assembly respectively.

2. The single-point suspension device according to claim 1, wherein, the first and the second balancing beam structure connect fixedly with the central shaft through a central shaft bearing seat, between the central shaft and the central shaft bearing seat, there is a central shaft copper socket arranged, whose both sides are arranged sequentiallyan oil-seal ring and an oil-seal seat, respectively,a base of the central shaft bearing seat is fixed to a backing plate of the balancing beam structure through a U-shaped bolt.

3. The single-point suspension device according to claim 1 or 2, wherein, each of the first and second balancing beam structure includes a square tube with a positioning hole arranged on either end and a backing plate arranged at a center position of the square tube and applied to installing the U-shaped bolt.

4. The single-point suspension device according to claim 3, wherein, a material of the square tube is a low carbon alloy steel, made of a hollow pipe extruding into a square shape by a square extrusion machine, and then processed and finished by heat treatment.

5. The single-point suspension device according to claim 1, wherein, it further comprises:
a spring seat is arranged on the central shaft, applied to fixing a shear spring or/and a variable-rigidity spring, the shear spring is arranged between a side plate of the central shaft platform and a side plate of the spring seat, the variable-rigidity spring is arranged between a top plate of the central shaft platform and a top plate of the spring seat.

6. The single-point suspension device according to claim 1, wherein,the central shaft platform is arranged symmetrically on both sides of a vertical plane passing through a center of the central shaft and perpendicular to an axial direction of the central shaft, two shear springs are arranged on both side plates of the central shaft platform respectively.

7. The single-point suspension device according to claim 1, wherein,the variable-rigidity spring comprises an elastic body made of a plurality of elastic materials, a steel board arranged on bottom of the elastic body and wrapped by the elastic body, and at least one installation hole arranged on bottom of the elastic body and applied to installing the fasteners.

8. The single-point suspension device according to claim 1, wherein, the shear spring comprises an elastic body made of elastic materials, a plurality of steel boards arranged in the elastic body and wrapped by the elastic body, as well as a plurality of installation holes arranged on top and bottom of the elastic body and applied to installing a plurality of fasteners.

9. The single-point suspension device according to either of claim 1, 7 or 8, wherein,the shear spring and/ or variable-rigidity spring is installed on the central shaft assembly through the fasteners directly or indirectly.

10. The single-point suspension device according to claim 1, wherein, it further comprises:
a platen with 1 central hole and 4 side holes arranged, wherein, the central hole, corresponding to the positioning hole arranged in the square tube, is applied to fixing the platen to the balancing beam structure; the side holes, applied to installing the U-shaped bolts, and the axle assembly is connected fixedly with the balancing beam structure through the U-shaped bolts.
